Europäisches Patentamt

European Patent Office

Office européen des brevets

(11) Veröffentlichungsnummer: **0 186 764**
**B1**

(12) # EUROPÄISCHE PATENTSCHRIFT

(45) Veröffentlichungstag der Patentschrift: **13.06.90**

(21) Anmeldenummer: **85114458.4**

(22) Anmeldetag: **14.11.85**

(51) Int. Cl.⁵: **B 01 D 35/30**

(54) **Filter zur Filtration von Fluiden.**

(30) Priorität: **17.11.84 DE 8433835 u**

(43) Veröffentlichungstag der Anmeldung:
**09.07.86 Patentblatt 86/28**

(45) Bekanntmachung des Hinweises auf die
Patenterteilung:
**13.06.90 Patentblatt 90/24**

(84) Benannte Vertragsstaaten:
**DE FR IT SE**

(56) Entgegenhaltungen:
**FR-A-1 005 684**
**US-A-4 113 627**

(73) Patentinhaber: **Sartorius GmbH.**
**Weender Landstrasse 94-108**
**D-3400 Göttingen (DE)**

(72) Erfinder: **Reulecke, Fritz**
**Burkhardtstrasse 18**
**D-3404 Adelebsen (DE)**
Erfinder: **Pradel, Günter**
**Söhlwiese 21**
**D-3400 Göttingen (DE)**

(74) Vertreter: **Köhler, Rudolf**
**c/o Sartorius GmbH Weender Landstrasse 94-108**
**D-3400 Göttingen (DE)**

Courier Press, Leamington Spa, England.

**Beschreibung**

Die Erfindung betrifft einen Filter zur Filtration von Fluiden, mit Fluidanschlüssen, einem ersten Gehäuseteil und einem zweiten Gehäuseteil, zwischen deren kreisförmigen und umlaufenden Öffnungsrändern bzw. Flanschteilen sandwichartig ein herausnehmbares Filterelement mit seiner Peripherie dichtend derart zwischen den miteinander verbundenen Gehäuseteilen eingeklemmt ist, daß Fluid von einem Gehäuseteil in das andere Gehäuseteil bestimmungsgemäß nur durch das Filterelement dringen kann, wobei das eine Gehäuseteil am Mantel seines dem Filterelement zugewandten Öffnungsrandes Gewindegänge aufweist. Solche Filter dienen zur Filtration von Flüssigkeiten und Gasen.

Ein solcher Filter nach dem Oberbegriff des Hauptananspruches ist z.B. durch das deutsche Gebrauchsmuster, DE-U-83 37 223 bekannt. Die Gehäuseteile aus Kunststoff werden über eine Schraubverbindung und eine elastische O-Ringdichtung unter Einschluß eines Flachfilterzuschnittes dichtend verbunden. Aufgrund der Schraubverbindung läßt sich der Flachfilterzuschnitt nach erfolgter Filtration für weitere Untersuchungen dem Gehäuse entnehmen. Das bekannte Gerät ist auch für die Druckfiltration geeignet, wobei beide Gehäuseteile direkt verschraubt sind. Bei einem anderen bekannten Gerät (EP-A-75 405) erfolgt die Verschraubung mittels eines als Überwurfmutter wirkenden Gewinderinges.

Werden dagegen zwei Gehäuseteile aus Kunststoff unter Einschluß eines Flachfilterzuschnittes ohne Einschluß eines elastischen O-Ringes mit Hilfe einer Überwurfmutter aus Kunststoff lösbar miteinander verbunden, so kommt es häufig zu einem Kaltfließen der sich aufeinander abstützenden Gewindegänge, wenn diese zur Erzeugung eines starken Anpreßdruckes im Bereich der abzudichtenden Stelle gegeneinander verspannt werden müssen. Durch Minderung der Elastizität (Relaxation) beim Schwinden und Alterung des Kunststoffes kann der anfänglich gute und dichte Preßsitz der verbundenen Teile zurückgehen und zu Undichtigkeiten der Verbindungsstelle führen. Andererseits ist die Verwendung von O-Ringdichtungen im Hinblick auf aggressive Medien und unter mikrobiologischen Gesichtspunkten nicht immer erwünscht, weil Partikel und Mikroorganismen den elastischen Dichtsitz unterwandern und sich dadurch z.B. einem Spülvorgang entziehen können.

Es ist auch bereits bekannt (US-A-4 113 627) bei Kleinfiltern, welche als Spritzenvorsätze oder Infusionsfilter geeignet sind, zwei mit ihren Flanschen unter Einschluß des Flachfilterzuschnittes aufeinanderliegende Gehäuseteile aus Kunststoff dauerhaft mit einem Verschlußring aus Kunststoff zu umspritzen, wobei Ausnehmungen des Gehäuseoberteils und Gehäuseunterteils übergriffen und satt aufgefüllt werden. Eine solche Verbindung ist weitgehend gasdicht und sehr stark druckbelastbar, jedoch unlösbar, so daß das Filterelement nicht entnehmbar ist. Dies gilt auch für ein zylindrisches Filterelement nach der DE-A-22 22 004 und DE-U-19 72 513.

Der Erfindung liegt daher die Aufgabe zugrunde, mit einfachen Mitteln ein Filter der eingangs beschriebenen Bauart derart zu verbessern, daß bei seiner Dichtungsausbildung O-Ringe als Dichtungsmittel eingespart werden können, wobei die einwandfrei dichte und druckfeste Einklemmung der Peripherie des Filterelementes zwischen den Gehäuseteilen sowie die leichte Zugänglichkeit zum Filterelement und dessen Entnahmemöglichkeit erhalten bleiben soll.

Die Erfindung, wie sie in den Ansprüchen gekennzeichnet ist, löst die Aufgabe, einen Filter für die Filtration von Fluiden zu schaffen, bei dem die Verbindung beider Gehäuseteile aus einem beide Gehäuseteile mit Filterelement in Dicht- und Klemmposition haltenden umspritzten Kunststoffring besteht, der die Gewindegänge des einen Gehäuseteiles satt ausfüllt und den Rand des anderen Gehäuseteiles nach Art einer lösbaren Überwurfmutter übergreift, wobei der spezifische Schmelzpunkt des Kunststoffringes niedriger liegt als der spezifische Schmelzpunkt des Gehäuseteiles, welches die Gewindegänge für den Kunststoffring aufweist.

Vorteilhafte Weiterbildungen sind in den Unteransprüchen angegeben.

Durch die erfindungsgemäße Ausbildung wird eine satte Ausfüllung der Gewindegänge gewährleistet, gleichzeitig aber aufgrund der Werkstoffpaarung auch gewährleistet, daß der Reibungskoeffizient zwischen dem angeformten Gewinde und dem angespritzten Gegengewinde ein relativ leichtes Lösen der Verbindungsstelle ermöglicht, so daß eine lösbare und gut belastbare Verbindung zwischen den Gehäuseteilen entsteht und das Filterelement für weitere Untersuchungen entnommen werden kann.

Die durch die Erfindung erreichten Vorteile sind darin zu sehen, daß bei gleichzeitiger Entnahmemöglichkeit des Filterelementes durch das Fehlen einer O-Ringdichtung zwischen den abzudichtenden Teilen sich diese Verbindung besonders auch für den mikrobiologischen Einsatzbereich eignet. Die definierte, unelastische Klemmung des Filterelementes zwischen den Gehäuserändern verhindert ein Unterwandern des Dichtsitzes.

Im folgenden wird die Erfindung anhand von lediglich einen Ausführungsweg darstellenden Zeichnungen näher erläutert.

Es zeigt.

Fig. 1 einen Vertikalschnitt durch einen Filter aus Kunststoff und

Fig. 2 eine Detailansicht des einen Gehäuseteiles im Bereich des Gewindeanfanges und Gewindendes.

Das für die Druckfiltration, für Sterilitätsprüfungen und mikrobiologische Untersuchungen geeignete Filtergerät besteht aus einem transparenten Gehäuseoberteil 1 mit zwei verschließbaren Einlässen 2 und 3 und einem Gehäuseunterteil 8 oder Filtertisch ebenfalls aus Kunststoff. Der untere Behälterrand 6 begrenzt die freie Filterfläche eines Flachfilterzuschnittes 7, welcher sandwichartig zwischen diesem Behälterrand 6 und einem umlaufenden planen Flansch 11 des Gehäuseunterteiles 8 einklemmbar ist. Das Gehäuseunterteil 8 hat eine drainierende Filterabstützung 10, welche in einem Auslaß 9 endet. Das Gehäuseoberteil 1 hat eine umlaufende Schulter 4, die in einen zylindrischen Außenrand übergeht, an den im Querschnitt z.B. trapezförmige Gewindegänge 5 eines mehrgängigen Gewindes angeformt sind.

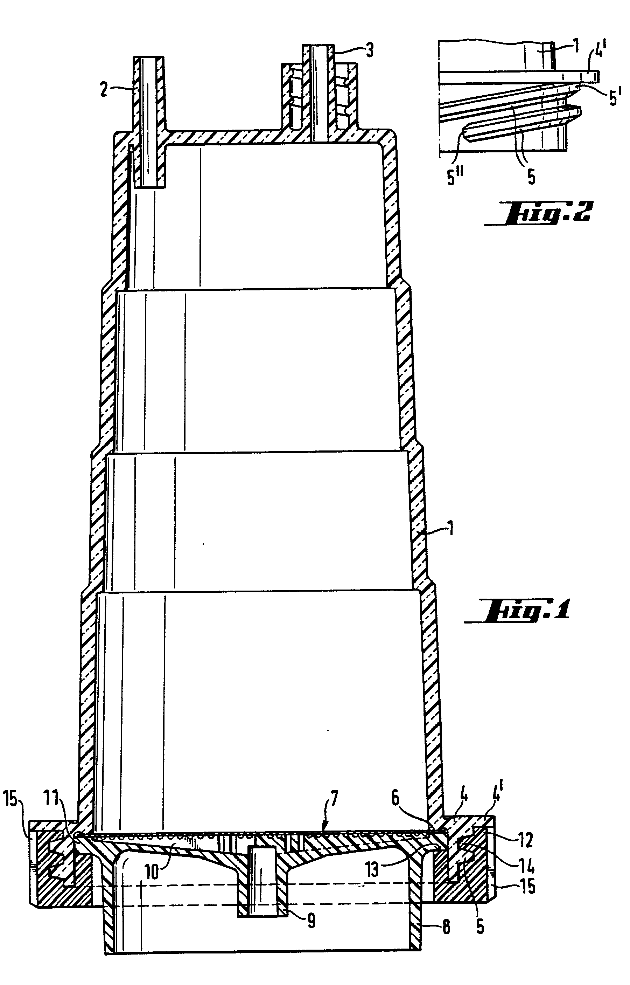

Wie aus der Detailansicht nach Fig. 2 deutlich wird, ist die Schulter 4 radial soweit ausgedehnt, daß ihre Schulterverlängerung 4' auf der Unterseite eine radiale und axiale Formbegrenzung für den zu umspritzenden Kunststoffring 12 bildet, wobei der Gewindegang 5 oder die Gewindegänge 5 mit ihrem Gewindeende 5' in die Unterseite der Schulterverlängerung 4' einlaufen. Der Gewindeanfang 5'' ist als Vollquerschnitt ausgebildet, wodurch eine Verformung durch den angespritzten Kunststoffring 12 vermieden wird.

Prinzipiell sind alle Gewindearten mit durchgehenden Gewindegängen möglich also auch Rund-, Säge- und Flachgewinde. Die Wahl richtet sich nach der Werkstoffpaarung, um die Reibungsgröße im Gewinde zu definieren. Die beiden Gehäuseteile 1 und 8 werden unter Einschluß des Flachfilterzuschnittes 7 bzw. eines anderen Filterelementes im Formwerkzeug für den zu umspritzenden Kunststoffring 12 in eine Dichtposition gegeneinander gepreßt und in diesem Zustand erfolgt das Umspritzen des Kunststoffringes 12 und das Beibehalten der Pressung beider Gehäuseteile 1 und 8 bis zum Verfestigen des Kunststoffringes 12. Der Kunststoff des Verschlußringes 12 wird satt in die Gewindegänge 5 eingepreßt und bildet andererseits das Widerlager 13 für die Unterseite des zweiten Gehäuseteiles bzw. des Filtertisches 8. Der umspritzte Kunststoffring 12 hat dadurch seinerseits Gewindegänge 14 erhalten, die mit den Gewindegängen 5 des anderen Gehäuseteiles 1 korrespondieren und sich von diesen in Umfangsrichtung durch eine Drehbewegung lösen lassen. Der spezifische Schmelzpunkt bzw. die Verarbeitungstemperatur des Kunststoffes für den Kunststoffring 12 im Formwerkzeug liegt so niedrig, daß ein Anschmelzen und Verformen der Gewindegänge 5 des einen Gehäuseteiles 1 vermieden werden. Vorzugsweise liegt auch der Schmelzpunkt des anderen Gehäuseteiles 8 höher als der des Kunststoffringes 12. Beide Gehäuseteile 1 und 8 sind damit voneinander lösbar und der Flachfilterzuschnitt 7 bzw. das diesbezügliche Filterelement kann für weitere Untersuchungen dem Filtergehäuse 1, 8 entnommen werden. Eine erneute Abdichtung über den verfestigten Kunststoffring 12 ist nicht vorgesehen. Zur erleichterten Handhabung des Kunststoffringes 12 beim Lösen sind am Umfang mehrere Griffnuten 15 oder Vorsprünge angeformt. Das Gehäuseoberteil 1 besteht z.B. aus Polycarbonat, der umspritzte Kunststoffring 12 aus polyamid und der Filtertisch 8 aus SAN Styrolacrylnitril.

Gemäß Darstellung ist das Gewinde 5 am Außenmantel des kreisförmigen Öffnungsrandes des Gehäuseteiles 1 angeordnet. Das Gewinde kann jedoch alternativ am Innenmantel des Gehäuseteiles angeordnet sein. Die vom Kunststoffring 12 eingeschlossene Mantelfläche kann dabei eine das Entfernen des Kunststoffringes erleichternde Konizität aufweisen. Die Gewinde 5 sind vorzugsweise zum leichteren Entfernen des Kunststoffringes als mehrgangige Kurzgewinde ausgebildet.

An die Stutzen 2,3 und 9 lassen sich Schläuche, Lüftungsfilter oder andere im Labor übliche Zusatzteile adaptieren. Wie aus der Schnittzeichnung deutlich wird, ist die Verbindung dazu geeignet sowohl hohe axiale Drücke als auch hohe radial wirkende Drücke aufzunehmen. Die dargestellte Ausführungsform des Filtergerätes ist als nicht wiederverwendbares Kunststoffgehäuse also als Einwegartikel bzw. als sogenannte Wegwerfeinheit aufgebaut, welches gebrauchsfertig sterilisiert ist.

Anstelle eines Flachfilterzuschnittes kann das Filterelement auch aus einem zylindrischen Filterelement mit Dichtflansch bestehen, welches ebenfalls zu weiteren Untersuchungen dem Filtergehäuse entnehmbar ist.

Für spezifische Anwendungsfälle kann es zweckmäßig sein, z.B. das Gehäuseunterteil 8 aus Metall und wiederverwendbar auszubilden.

**Patentansprüche**

1. Filter zur Filtration von Fluiden mit Fluidanschlüssen, einem ersten Gehäuseteil und einem zweiten Gehäuseteil, zwischen deren kreisförmigen und umlaufenden Öffnungsrändern bzw. Flanschteilen sandwichartig ein herausnehmbares Filterelement mit seiner Peripherie dichtend derart zwischen den miteinander verbundenen Gehäuseteilen eingeklemmt ist, daß Fluid vom einen Gehäuseteil in das andere Gehäuseteil bestimmungsgemäß nur durch das Filterelement dringen kann, wobei das eine Gehäuseteil am Mantel seines dem Filterelement zugewandten Öffnungsrandes Gewindegänge aufweist, dadurch gekennzeichnet, daß die Verbindung beider Gehäuseteile (1 und 8) aus einem die beiden Gehäuseteile (1 und 8) mit Filterelement (7) in Dicht- und Klemmposition haltenden umspritzten Kunststoffring (12) besteht., der die Gewindegänge (5) des einen Gehäuseteils (1) satt ausfüllt und den Rand (11) des anderen Gehäuseteiles (8) nach Art einer lösbaren Überwurfmutter übergreift, wobei der spezifische Schmelzpunkt des Kunststoffringes (12) niedriger liegt, als der spezifische Schmelzpunkt des Gehäuseteiles (1), welches die Gewindegänge (5) aufweist.

2. Filter nach Anspruch 1, dadurch gekennzeichnet daß das die Gewindegänge aufweisende Gehäuseteil (1) aus Kunststoff gebildet ist.

3. Filter nach Anspruch 1 und 2, dadurch gekennzeichnet, daß der Kunststoffring (12) und das ohne Gewindegänge (5) ausgebildete Gehäuseteil (8) aus dem gleichen Kunststoff bestehen.

4. Filter nach Anspruch 1, dadurch gekennzeichnet, daß die beiden Gehäuseteile (1 und 8) aus Kunststoff bestehen, deren spezifische Schmelzpunkte höher liegen als der des umspritzten Kunststoffringes (12).

5. Filter nach Anspruch 1 bis 4, dadurch gekennzeichnet, daß das Gewinde (5) als mehrgängiges Gewinde ausgebildet ist.

6. Filter nach Anspruch 1 bis 5, dadurch gekennzeichnet, daß der umspritzte Kunststoffring (12) auf seiner Außenseite Griffnuten (15) oder Vorsprünge aufweist.

7. Filter nach Anspruch 1 bis 6, dadurch gekennzeichnet, daß das mit Gewindegängen (5) ausgestattete Gehäuseteil (1) aus Polycarbonat und der umspritzte Kunststoffring (12) aus Polyamid gebildet sind.

8. Filter nach Anspruch 1 bis 6, dadurch gekennzeichnet, daß die Gewindegänge (5) des einen Gehäuseteiles (1) durch eine radial abstehende Schulter (4, 4') dieses Gehäuseteiles (1) in axialer Richtung begrenzt sind und diese als axiale und radiale Begrenzungsfläche für den umspritzten Kunststoffring (12) gestaltet ist, wobei das Gewinde (5) mit seinem Gewindeende (5') in die Unterseite der Schulter (4,4') einläuft.

9. Filter nach Anspruch 1 bis 8, dadurch gekennzeichnet daß der Gewindeanfang (5'') des das Gewinde (5) tragenden Gehäuseteils (1) mit dem vollen Gewindequerschnitt beginnt.

10. Filter nach den Ansprüchen 1, 2, 4, 8, 9, dadurch gekenn zeichnet. daß für eine visuelle und mikrobiologische Kontrolle und Untersuchung mindestens ein Gehäuseteil (1) aus transparentem Kunststoff besteht und das Filterelement durch einen diesem Gehäuseteil (1) mit seiner einen Seite zugewandten Flachfilterzuschnitt (7) gebildet ist.

## Revendications

1. Filtre pour la filtration de fluides, comportant des raccords pour fluide, une première partie de boîtier et une seconde partie de boîtier entre les bords d'ouverture, ou parties en rebord, circulaires et continus, desquelles un élément filtrant amovible est bridé de façon étanche, en sandwich, par sa périphérie, entre les parties de boîtier réunies l'une à l'autre de façon telle que du fluide ne peut passer d'une partie de boîtier dans l'autre partie de boîtier, selon les prescriptions, que par l'élément filtrant, étant précisé que la première partie de boîtier présente, sur la surface latérale de son bord d'ouverture côté élément filtrant, des filets, filtre caractérisé en ce que la liaison des deux parties (1 et 8) de boîtier est constituée d'une bague (12) en matière plastique injectée, qui maintient les deux parties (1 et 8) de boîtier avec l'élément filtrant (7) en position d'étanchéité et de bridage, qui remplit sans jeu les filets (5) de la première partie (1) de boîtier et qui recouvre le bord (11) de l'autre partie (8) de boîtier à la façon d'un écrou-chapeau dévissable, étant précisé que le point de fusion spécifique de la bague (12) en matière plastique se situe au-dessous du point de fusion spécifique de la partie (1) de boîtier qui présente les filets (5).

2. Filtre selon la revendication 1, caractérisé en ce que la partie (1) de boîtier, qui présente les filets, est formée de matière plastique.

3. Filtre selon les revendications 1 et 2, caractérisé en ce que la bague (12) en matière plastique et la partie (8) de boîtier conçue sans filets (5) sont constituées de la même matière plastique.

4. Filtre selon la revendication 1, caractérisé en ce que les deux parties (1 et 8) du boîtier sont constituées de matières plastiques dont les points de fusion spécifiques se situent au-dessus de celui de la bague (12) en matière plastique injectée.

5. Filtre selon les revendications 1 à 4, caractérisé en ce que le filetage (5) est conçu comme formé de filets multiples.

6. Filtre selon les revendications 1 à 5, caractérisé en ce que la bague (12) en matière plastique injectée présente sur sa face extérieure des rainures (15) de prise ou des saillies.

7. Filtre selon les revendications 1 à 6, caractérisé en ce que la partie (1) de boîtier munie de filets (5) est formée en polycarbonate et la bague (12) en matière plastique injectée est en polyamide.

8. Filtre selon les revendications 1 à 6, caractérisé en ce que les filets (5) de la première partie (1) de boîtier sont limités en direction axiale par un épaulement (4, 4') de cette partie (1) de boîtier, qui s'en détache radialement; et en ce que cet épaulement est conçu comme surface de limitation axiale et radiale pour la bague (12) en matière plastique injectée, étant précisé que le filetage (5) rentre, par sa fin (5') de filet, dans la face inférieure de l'épaulement (4, 4').

9. Filtre selon les revendications 1 à 8, caractérisé en ce que le début (5'') de la partie (1) de boîtier portant le filetage (5) commence à section de filet pleine.

10. Filtre selon les revendications 1, 2, 4, 8, 9, caractérisé en ce que, pour un contrôle et un examen visuels et microbiologiques, au moins une partie (1) de boîtier est constituée d'une matière plastique transparente; et en ce que l'élément filtrant est formé par une garniture filtrante plate (7), dont la première face est tournée vers cette partie (1) de boîtier.

## Claims

1. Filter for the filtration of fluids with fluid connections, a first housing part and a second housing part, between the circular and encircling opening rims or flange parts of which a removable filter element is sealingly clamped in by its periphery in such a manner between the housing parts, which are one connected with the other, that fluid can penetrate from one housing part into the other housing part as intended only through the filter element, wherein the one housing part displays thread courses at the shell of its opening rim facing the filter element, characterised thereby, that the connection of both the housing parts (1 and 8) consists of a synthetic material ring (12), which is moulded around both the housing parts (1 and 8) with filter element (7), holds them in sealing and clamping position, fills out flushly the thread courses (5) of the one housing part (1) and engages over the rim (11) of the other housing part (8) in the manner of a detachable union nut, wherein the specific melting point of the synthetic material ring (12) lies lower than the specific melting point of the housing part (1), which displays the thread courses (5).

2. Filter according to claim 1, characterised thereby, that the housing part (1) displaying the thread courses is formed of synthetic material.

3. Filter according to claim 1 and 2, characterised thereby, that the synthetic material ring (12) and the housing part (8) formed without thread courses (5) consist of the same synthetic material.

4. Filter according to claim 1, characterised thereby, that both the housing parts (1 and 8) consist of synthetic material, the specific melting points of which lie higher than that of the moulded-round synthetic material ring (12).

5. Filter according to claim 1 to 4, characterised thereby, that the thread (5) is formed as multi-start thread.

6. Filter according to claim 1 to 5, characterised thereby, that the moulded-round synthetic material ring (12) displays grip grooves (15) or projections on its outside.

7. Filter according to claim 1 to 6, characterised thereby, that the housing part (1) equipped with thread courses (5) is formed of polycarbonate and the moulded-round synthetic material ring (12) of polyamide.

8. Filter according to claim 1 to 6, characterised thereby, that the thread courses (5) of the one housing part (1) are bounded in axial direction by a radially projecting shoulder (4, 4') of this housing part (1) and that this shoulder (4, 4') is structured as radial and axial boundary surface for the moulded-round synthetic material ring (12), wherein the thread (5) runs by its thread end (5') into the underside of the shoulder (4, 4').

9. Filter according to claim 1 to 8, characterised thereby, that the thread start (5'') of the housing part (1) carrying the thread (5) starts with the full thread cross-section.

10. Filter according to claims 1, 2, 4, 8 and 9, characterised thereby, that for a visual and microbiological check and examination, at least one housing part (1) consists of transparent synthetic material and the filter element is formed by a flat filter blank (7) facing this housing part (1) by its one side.

EP 0 186 764 B1

Fig.2

Fig.1